**Europäisches Patentamt**

**European Patent Office**

**Office européen des brevets**

(19)

(11) Veröffentlichungsnummer : **0 107 026**
**B1**

(12) **EUROPÄISCHE PATENTSCHRIFT**

(45) Veröffentlichungstag der Patentschrift :
09.09.87

(51) Int. Cl.⁴ : **G 06 F 13/36**

(21) Anmeldenummer : 83109208.5

(22) Anmeldetag : 16.09.83

(54) Speicherprogrammierbare Steuerung.

(30) Priorität : 30.09.82 DE 3236302

(43) Veröffentlichungstag der Anmeldung :
02.05.84 Patentblatt 84/18

(45) Bekanntmachung des Hinweises auf die Patenterteilung : 09.09.87 Patentblatt 87/37

(84) Benannte Vertragsstaaten :
AT CH DE FR GB IT LI SE

(56) Entgegenhaltungen :
WO-A-80 /008 83
PATENTS ABSTRACTS OF JAPAN, Band 6, Nr. 2 (P-96)[880], 8. Januar 1982
THE 8th ANNUAL SYMPOSIUM ON COMPUTER ARCHITECTURE, 12.-14. Mai 1981, Minneapolis, Minnesota, Seiten 107-133, IEEE, New York, US; BAIN u.a.: "Performance analysis of high-speed digital buses for multiprocessing systems"

(73) Patentinhaber : **Siemens Aktiengesellschaft Berlin und München**
**Wittelsbacherplatz 2**
**D-8000 München 2 (DE)**

(72) Erfinder : **Tendulkar, Gautam**
**Eskilstunastrasse 17**
**D-8520 Erlangen (DE)**
Erfinder : **Richter, Wolfgang Dipl.-Ing.**
**Trifelstrasse 9**
**D-6741 Birkweiler (DE)**
Erfinder : **Becker, Claus, Dr.**
**Wilhelm-Tell-Strasse 17**
**D-7556 Ötigheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**0 107 026**

**Beschreibung**

Die Erfindung bezieht sich auf eine speicherprogrammierbare Steuerung für den Prozeßablauf bei einer Arbeitsmaschine unter Verwendung eines Multiprozessorsystems mit folgenden Merkmalen :

a) die Prozessoreinheit, Koppelspeicher und Eingabeund Ausgabebaugruppen für Signale vom und zum Prozeß sind an einen gemeinsamen Systembus anschaltbar,

b) jede Prozessoreinheit umfaßt Teilprogramm- und Datenspeicher, auf die direkt zugegriffen werden kann,

c) eine Bussteuerung gibt den Zugriff zum gemeinsamen Systembus nur für jeweils eine der Prozessoreinheiten frei,

d) in einem Speicher der Bussteuerung sind die Zugriffsreihenfolge der Prozessoreinheiten und die jeweilige Zugriffsdauer zum gemeinsamen Systembus speicherbar,

e) diese Speicherwerte dienen sequentiell bei jedem Durchlauf eines aus einer vorgegebenen Zahl von Grundtakten bestehenden Buszyklus zur Erzeugung der entsprechenden Busfreigabesignale.

Mit diesem Oberbegriff wird auf eine Steuerung Bezug genommen, wie sie beispielsweise aus der Druckschrift JP 56 12 7231 bekannt ist.

Es ist ferner eine Systembussteuerungsvorrichtung bekannt, bei der die Zugriffsdauer durch Änderung des Speicherinhalts dynamisch geändert werden kann (WO - A - 800 883).

Multiprozessorsysteme und die Fragen der Buszuteilung sind ferner beschrieben in der Zeitschrift « Elektronik » 1982, Seiten 76 bis 95. Einzelheiten über speicherprogrammierbare Steuerungen finden sich beispielsweise in den US-PS 39 21 146 ; 39 42 158 oder in der europäischen Patentanmeldung 10 170.

Die Aufgabe der vorliegenden Erfindung besteht darin, bei einer Steuerung der eingangs genannten Art den Buszugriff auf einfache und definierte Weise zu steuern und zu überwachen.

Diese Aufgabe wird erfindungsgemäß dadurch gelöst, daß

f) die jeweilige Zugriffsdauer zum Systembus als wählbares ganzzahliges Vielfaches des Grundtaktes speicherbar ist, der seinerseits aus einem internen Taktgeber oder aus dem Takt der Arbeitsmaschine abgeleitet ist und

g) eine Busüberwachungssteuerung vorgesehen ist, mit der die Zahl der tatsächlichen Buszugriffe jeder Prozessoreinheit zum Systembus innerhalb einer vorgegebenen Zahl ihrer Busfreigaben durch Zählvorgänge überwachbar ist.

Durch die grundtaktabhängige Buszuteilung ist die auf den Prozeß bezogene Reaktionszeit der einzelnen Prozessoren einfach vorgebbar ; gleichzeitig ist aber auch eindeutig feststellbar, ob die Prozessoren diese Reaktionszeit auch einhalten.

Die Bussteuerung ist vorteilhafterweise Bestandteil eines Kommunikationsprozessors, der ebenfalls an den gemeinsamen Bus angeschlossen wird. Das vorstehend beschriebene modulare Gerät mit den einzelnen Prozessoreinheiten und dem Kommunikationsprozessor kann zu einer gemeinsamen Baueinheit zusammengefaßt und in einem Gehäuse untergebracht werden.

Anhand eines in der Zeichnung dargestellten Ausführungsbeispieles sei die Erfindung näher erläutert ; es zeigen :

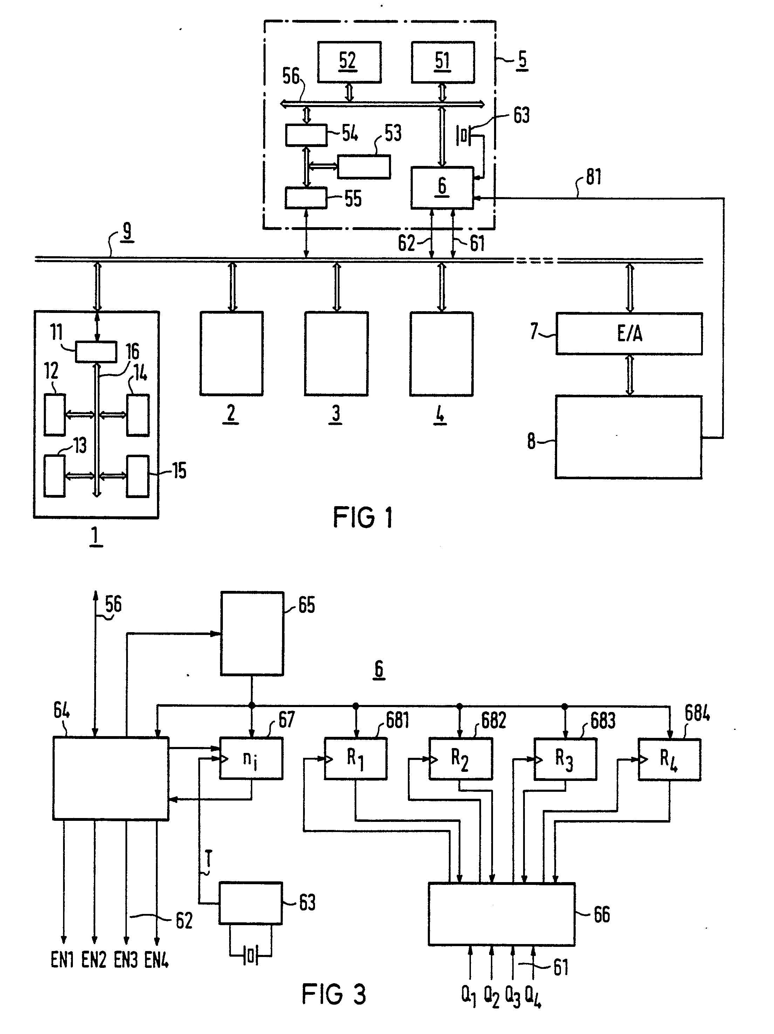

Figur 1 das Prinzipschaltbild der Systemarchitektur des Mehrprozessorsystems,

Figur 2 die zeitliche Buszuteilung des Buszugriffes zu den einzelnen Prozessoreinheiten, d. h. die Buszuteilungsmatrix, und

Figur 3 Schaltungseinzelheiten der Bussteuerung.

Das modulare Mehrprozessor-Automatisierungsgerät besteht aus einer Kommunikationsprozessoreinheit 5 und einer beliebigen Zahl von Steuerungs- und/oder Regelungsprozessoreinheiten. Im vorliegenden Fall sind vier gleichartige Regelungs- bzw. Steuerprozessoreinheiten 1 bis 4 vorgesehen. Alle Prozessoreinheiten 1 bis 5 sind über einen gemeinsamen Systembus 9 verbunden. An diesem Systembus 9 sind auch die Eingabe- und Ausgabebaugruppen 7 zum Prozeß 8 (Arbeitsmaschine) und gegebenenfalls auch weitere Peripheriebaugruppen angeschlossen. Die der Prozessoreinheit 1 zugeordneten prozessoren, im vorliegenden Fall ein Wortprozessor 12 und ein Bitprozessor 13, können cher 14 bzw. dem Datenspeicher 15 verkehren und das programm autonom und ohne Beeinflussung der anderen Prozessoreinheiten verarbeiten. Ein Zugriff über das Koppelglied 11 auf den externen Systembus 9 ist nur zum Austausch bzw. Einlesen der Zustände der Signale in den Eingangs- und Ausgangsbaugruppen 7 und/oder des Inhalts des gemeinsamen Koppelspeichers 53 in der Kommunikationsprozessoreinheit 5 notwendig. Sinngemäß das gleiche gilt für die übrigen Prozessoreinheiten 2 bis 4.

Die Kommunikationsprozessoreinheit 5 umfaßt neben dem über das Koppelglied 55 an den gemeinsamen Systembus 9 anschließbaren Koppelspeicher 53 einen Zentralprozessor 51, einen Programm- und Datenspeicher 52 und eine Bussteuerung 6 mit einstellbarem Taktgeber 63.

Die Kommunikationsprozessoreinheit 5 hat ebenfalls einen eigenen lokalen Bus 56, der über die

2

Koppelglieder 54 und 55 an den gemeinsamen Systembus 9 angeschaltet werden kann.

Der Zugriff der einzelnen prozessoreinheiten (CPU) 1 bis 4 zum gemeinsamen Systembus 9 wird durch die Bussteuerung 6 geregelt. Der Einfachheit halber ist dies in der Weise dargestellt, daß die von der Bussteuerung 6 ausgehenden Steuerleitungen 62 den Systembus 9 entsprechend ansteuern. Hat die betreffende Prozessoreinheit entsprechend der programmierten Buszoordnung das Busfreigabesignal erhalten, so muß innerhalb einer vorgegebenen Zeitspanne der abgeschlossene Zugriff zum gemeinsamen Systembus 9 zur Bussteuerung 6 über die Leitung 61 zurückgemeldet werden. Die Kommunikationsprozessoreinheit 5 kann außerdem über ein Stopsignal die Steuerungsprozessoreinheiten 1 bis 4 anhalten bzw. durch Wegnahme des Stopsignals freigeben.

Die Buszuteilung in jedem Buszyklus wird entweder maschinentaktabhängig oder durch einen internen Taktgeber gesteuert. Hierzu wird im ersten Fall z. B., wie durch die Leitung 81 angedeutet, aus dem prozeß 8 ein Taktsignal abgeleitet. Dieses Taktsignal kann beispielsweise der Drehzahl der Hauptantriebswelle der Arbeitsmaschine proportional sein. Es sollte jedenfalls immer ein Signal sein, auf das sich die übrigen Änderungen des Prozeßablaufes in der Arbeitsmaschine beziehen lassen. Alternativ kann der Grundtakt auch von einem internen Taktgeber 63 erzeugt werden. Hierdurch sind dann garantierte Reaktionszeiten möglich.

Der durch den Taktgeber 63 gelieferte Takt kann vom Anwender individuell eingestellt werden. Jeder Prozessoreinheit 1 bis 4 wird für eine gewisse Zeit $T_i$ (i = 1-4 ) ein ganzzahliges Vielfaches $n_i$ des Grundtaktes T als Buszugriffszeit zugewiesen :

$$T_i = n_i . T$$

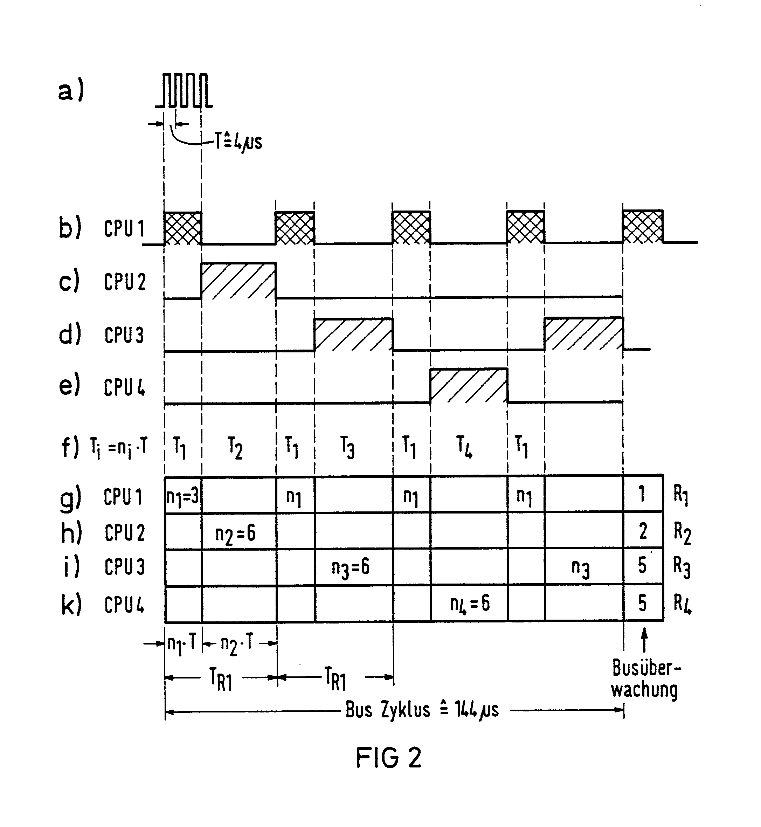

Weiterhin wird die Reihenfolge und Häufigkeit des Buszugriffs jeder Prozessoreinheit in einem Buszyklus, d. h. einem Durchlauf der Buszuordnungsmatrix, festgelegt. Diese Buszuordnungsmatrix, die in den Zeilen g bis k von Figur 2 dargestellt ist, ist in der Kommunikationsprozessoreinheit 5 gespeichert und wird von der Bussteuerung 6 entsprechend ausgewertet.

Das Grundtaktsignal T ist in Zeile a von Figur 2 dargestellt. Die Buszugriffsdauer $T_i$ jeder Prozessoreinheit 1 bis 4 und die Abstände der Busfreigaben jeder Prozessoreinheit werden von diesem Grundtakt T abhängig gemacht. Wie z. B. aus Zeile b ersichtlich, in der die Busfreigabedauer für die Prozessoreinheit 1 angegeben ist, erhält diese Prozessoreinheit 1 in den Zeitintervallen $T_1$ (Zeile f) den Zugriff zum gemeinsamen Systembus 6. Diesem Zeitintervall $T_1$ entsprechen hier drei Grundtakte, d. h. n 1 = 3 (Zeile g). Nach Auffrischen des jeweiligen Prozeßabbildes über den Systembus 9 bearbeitet diese Prozessoreinheit 1 ihr Anwenderprogramm unabhängig von den Nachbarprozessoreinheiten. Nach Beendigung der Programmbearbeitung verzweigt die Prozessoreinheit 1 in eine Warteschleife bis zur nächsten Busfreigabe im Zeitintervall $T_1$. Ähnliches gilt für die übrigen Prozessoreinheiten 2 bis 4, deren Buszuteilungen mit den Intervallen $T_2$ bis $T_4$ in den Zeilen c bis e von Figur 2 dargestellt sind.

Die Zeiten $T_1$ bis $T_4$ für die Systembuszuteilung sind abhängig von der Zahl der Ein- und Ausgänge und der Koppelmerker, die pro Bearbeitungszyklus aufgefrischt werden müssen.

Durch die vorgegebene Buszuteilungsmatrix wird sichergestellt, daß vorgeschriebene Reaktionszeiten von jeder Prozessoreinheit eingehalten werden können.

Die in Figur 3 gezeigte Bussteuerung 6 besteht aus einer Busfreigabesteuerung 64, die die einzelnen Busfreigaben $EN_1$ bis $EN_4$ auf den Leitungen 62 für die einzelnen Prozessoreinheiten 1 bis 4 liefert, einem Speicher 65 und einem Zähler 67, der durch den Taktgeber 63 getaktet wird. Ferner ist noch eine Überwachungsvorrichtung vorhanden, die späterhin erläutert wird. Wie bereits erwähnt, wird jeder Prozessoreinheit 1 bis 4 für eine Zeit $T_i$ das $n_i$-fache des Grundtaktes T als Buszugriffszeit zugewiesen, d. h. :

$$T_i = n_i . T$$

Diese Werte n können als Zahlenwerte vom Anwender in den Speicher 65 geladen werden. Damit ergibt sich z. B. für das Beispiel nach Figur 2 eine Zuweisung $T_i = n_i . T$ und gleichzeitige Festlegung der Reihenfolge der Zugriffe gemäß folgendem Speicherschema

$$n1 = 3$$
$$n2 = 6$$
$$n1 = 3$$
$$n3 = 6$$
$$n1 = 3$$
$$n4 = 6$$
$$n1 = 3$$
$$n3 = 6$$

Diese Daten $n_1$ werden von der Busfreigabesteuerung 64 sequentiell aus dem Speicher 65 geholt und

3

jeweils in den Zähler 67 eingesetzt. Dieser wird dann mit dem Grundtakt T auf den Wert Null herabgezählt Damit ergeben sich dann jeweils die einzelnen Busfreigabezeiten $T_1$ bis $T_4$ durch entsprechende Meldung des Zählerstandes des Zählers 67 an die Busfreigabesteuerung 64. Diese Buszuteilungsmatrix wiederholt sich jedesmal nach dem Ablauf eines Buszyklus, der z. B. in dem vorliegenden Beispiel 144 μsec beträgt. Im vorliegenden Beispiel wird also zunächst bei Beginn eines Buszyklus in den Zähler 67 der Wert $n_1 = 3$ eingesetzt und gleichzeitig die diesem Wert $n_1$ zugeordnete Prozessoreinheit 1 durch das Freigabesignal $EN_1$ auf den gemeinsamen Systembus 9 geschaltet. Ist der Zähler 67 auf Null durch die Takte T angelangt, so sperrt die Busfreigabesteuerung 64 die Busfreigabe für die Prozessoreinheit 1. Entsprechendes gilt dann für die übrigen Prozessoreinheiten, deren Belegungsschema aus der Buszuordnungsmatrix nach Figur 2 ersichtlich ist. Zusätzlich wird in der Bussteuerung 6 nun noch überwacht, das wievielte Busfenster von jeder Prozessoreinheit 1 bis 4 spätestens für den Zugriff wahrgenommen werden muß. Diese Werte $R_1$ bis $R_4$ für die einzelnen Prozessoreinheiten 1 bis 4 sind z. B. folgende Werte :

$$R1 = 1 \quad\quad R3 = 5$$
$$R2 = 2 \quad\quad R4 = 5$$

dies bedeutet, daß die prozessoreinheit 1 in jedem Busfreigabezeitraum den Bus belegen und damit den prozeß bedienen muß, die Prozessoreinheit 2 in jedem zweiten möglichen Buszugriff auch auf den Bus zugreifen muß usw. Damit lassen sich Reaktionszeiten der Zentraleinheiten auf den Prozeß überwachen. Schaltungstechnisch wird dies nach Figur 3 dadurch gelöst, daß die einzelnen Werte $R_1$ bis $R_4$ in Zähler 681 bis 684 eingesetzt werden und diese Zähler durch die Busüberwachungssteuerung 66 bei jeder entsprechenden Busfreigabe der zugeordneten Prozessoreinheit herabgezählt werden. Bei der Quittierung $Q_1$-$Q_4$ des entsprechenden Buszugriffes auf den Leitungen 61 werden dann die Zähler 681 bis 684 jeweils wieder auf den Anfangswert gesetzt. Bleibt das Quittierungssignal innerhalb der vorgegebenen Reaktionszeit aus, so ist der betreffende Zähler nach der letzten Buszuteilung auf den Wert Null, und damit die vorgegebene Reaktionszeit überschritten. Im vorliegenden Fall betragen die überwachten Reaktionszeiten $T_R$ für die prozessoreinheiten 1 bis 4

Prozessoreinheit 1 : $T_{R1} = (n_1 + n_2) \cdot T \cdot R_1 = (n_1 + n_3) \cdot T \cdot R_1 = (n_1 + n_4) \cdot T \cdot R_1 = 36$ μsec
Prozessoreinheit 2 : $T_{R2} = (n_2 + 4n_1 + 2n_3 + n_4) \cdot T \cdot R_2 = 288$ μsec
Prozessoreinheit 3 : $T_{R3} = (n_3 + 2n_1 + n_4) \cdot T \cdot R_3 = (n_3 + 2_{n1} + n_2) \cdot T \cdot R_3 = 360$ μsec
Prozessoreinheit 4 : $T_{R4} = (4n_1 + 2n_3 + n_2 + n_4) \cdot T \cdot R_4 = 720$ μsec

Im Rahmen der vorstehend erwähnten Steuerungen können auch weitere Überwachungen vorgenommen werden. Wird z. B. eine erforderliche Busfreigabe nicht ausgenutzt, so kann im Koppelspeicher 53 ein Merker gesetzt werden, den die nächste Prozessoreinheit erkennen kann. Diese kann dann entweder eine Fehlermeldung abgeben oder die Ausgangsbefehle übernehmen, falls aus Sicherheitsgründen zwei Rechner parallel arbeiten. Redundante und sicherheitsgerichtete Systeme sind auf diese Weise daher relativ einfach zu realisieren.

Erwähnt sei noch, daß im Koppelspeicher 50 der Kommunikationsprozessoreinheit 5 auch die Zuordnungslisten der einzelnen Prozessoreinheiten 1 bis 4 zu den Eingabeund Ausgabebaueinheiten 7 niedergelegt sein können sowie auch die Signalübermittlungsvorschriften zwischen den Prozessoren ; ferner auch Regel- oder sonstige Parameter, die gegebenenfalls veränderlich sind.

Bei Bedarf kann auch mit einer einzigen Prozessoreinheit gearbeitet werden. In einem solchen Fall entspricht das System einem konventionellen programmierbaren Steuerungsgerät. Es tritt dann lediglich an die Stelle der sequentiellen Busfreigabe eine Dauerfreigabe.

**Patentansprüche**

1. Speicherprogrammierbare Steuerung für den Prozeßablauf bei einer Arbeitsmaschine unter Verwendung eines Multiprozessorsystems mit folgenden Merkmalen :

a) die Prozessoreinheit (1-4 ), Koppelspeicher und Eingabe- und Ausgabebaugruppen für Signale vom und zum Prozeß sind an einen gemeinsamen Systembus (9) anschaltbar,

b) jede Prozessoreinheit umfaßt Teilprogramm- und Datenspeicher (14, 15), auf die direkt zugegriffen werden kann,

c) eine Bussteuerung (6) gibt den Zugriff zum gemeinsamen Systembus (9) nur für jeweils eine der Prozessoreinheiten frei,

d) in einem Speicher (65) der Bussteuerung (6) sind die Zugriffsreihenfolge der Prozessoreinheiten (1 bis 4) und die jeweilige Zugriffsdauer ($T_i$) zum gemeinsamen Systembus (6) speicherbar,

e) diese Speicherwerte dienen sequentiell bei jedem Durchlauf eines aus einer vorgegebenen Zahl von Grundtakten (T) bestehenden Buszyklus zur Erzeugung der entsprechenden Busfreigabesignale (EN), dadurch gekennzeichnet, daß

f) die jeweilige Zugriffsdauer ($T_i$) zum Systembus (9) als wählbares ganzzahliges Vielfaches ($u_i$) des Grundtaktes (T) speicherbar ist, der seinerseits aus einem internen Taktgeber (63) oder aus dem Takt der Arbeitsmaschine abgeleitet ist und

g) eine Busüberwachungssteuerung (66) vorgesehen ist, mit der die Zahl der tatsächlichen Buszugriffe jeder Prozessoreinheit (1 bis 4) zum Systembus (9) innerhalb einer vorgegebenen Zahl ihrer Busfreigaben durch Zählvorgänge überwachbar ist.

2. Speicherprogrammierbare Steuerung nach Anspruch 1, dadurch gekennzeichnet, daß Bussteuerungs- und Busüberwachungssystem (6, 66) einer an den gemeinsamen Systembus (9) angeschlossenen Kommunikationsprozessoreinheit (5) zugeordnet sind.

**Claims**

1. A store-programmable control unit for the process flow of a machine, employing a multiprocessor system which includes the following features :

a) the processor unit (1-4 ), coupling store and input- and output assemblies for signals from and to the process can be connected to a common system bus (9),

b) each processor unit comprises sub-programme- and data stores (14,15) to which direct access can be gained,

c) a bus control unit (6) enables access to the common system bus (9) in each case for only one of the processor units,

d) the access sequence of the processor units (1 to 4) and the respective access duration ($T_i$) to the common system bus (6) can be stored in a store (65) of the bus control unit (6),

e) in each run of a bus cycle, composed of a predetermined number of basic clock signals (T), these stored values serve to produce the corresponding bus enabling signals (EN), characterised in that

f) the respective access duration ($T_i$) to the system bus (9) can be stored as a selectable whole-numbered multiple ($u_i$) of the basic clock signal (T) which is itself derived from an internal clock generator (63) or from the clock rate of the machine and

g) a bus monitoring control unit (66) is provided, with which the number of the actual bus accesses of each processor unit (1 to 4) to the system bus (9) within a predetermined number of bus enablements can be monitored by means of counting procedures.

2. A store-programmable control unit as claimed in claim 1, characterised in that bus control- and bus monitoring system (6, 66) are assigned to a communications processor unit (5) which is connected to the common system bus (9).

**Revendications**

1. Dispositif de commande à programme enregistré pour le déroulement d'un processus dans une machine à exécuter des travaux moyennant l'utilisation d'un système à multiprocesseurs, présentant les caractéristiques suivantes :

a) l'unité formant processeur (1-4 ), des mémoires de couplage et des modules d'entrée et de sortie pour des signaux provenant et aboutissant au processus peuvent être raccordées à un bus (9) commun du système,

b) chaque unité formant processeur comporte des mémoires (14,15) de programmes partiels et de données, auquel on peut avoir un accès direct,

c) un dispositif (6) de commande du bus libère l'accès au bus commun (9) du système uniquement pour respectivement l'une des unités formant processeurs,

d) la séquence d'accès des unités formant processeurs (1 à 4) et la durée respective d'accès ($T_i$) au bus commun (6) du système peuvent être mémorisées dans une mémoire (65) du dispositif (6) de commande du bus,

e) ces valeurs de mémoire sont utilisées de façon séquentielle lors de chaque exécution d'un cycle du bus, constitué par un nombre prédéterminé d'impulsions de cadence de base (T), pour produire les signaux correspondants (EN) de libération du bus, caractérisé par le fait que

f) la durée respective ($T_i$) d'accès au bus (9) du système peut être mémorisée sous la forme d'un multiple entier ($u_i$), pouvant être choisi, de la durée de la cadence de base (T), qui est dérivée pour sa part d'un générateur interne de cadence (60) ou de la cadence de la machine-outil, et

g) il est prévu un dispositif (66) de contrôle du bus, l'aide duquel le nombre des accès effectifs de chaque unité formant processeur (1 à 4) au bus (9) du système peut être contrôlé par des processus de comptage, en deçà d'un nombre prédéterminé de libérations du bus, qu'il a autorisées.

2. Dispositif de commande à programme enregistré suivant la revendication 1, caractérisé par le fait que le système de commande du bus et le système de contrôle du bus (6, 66) sont associés à une unité (5) formant processeur de communication raccordée au bus commun (9) du système.

FIG 1

FIG 3

FIG 2